# EUROPEAN PATENT SPECIFICATION

(11) **EP 1 654 173 B1**
(45) Date of publication and mention of the grant of the patent: **20.01.2010**
(21) Application number: 04781193.0
(22) Date of filing: 12.08.2004
(51) Int. Cl.: B65G 17/06

(54) **MODULAR BELT WITH PIVOT ROD**
MODULARES TRANSPORTBAND MIT VERBINDUNGSSTANGE
COURROI MODULAIRE DE TRANSPORT AVEC TIGE DE RETENUE

(30) Priority: 12.08.2003 US 494378 P
(43) Date of publication of application: 10.05.2006
(73) Proprietor: Habasit AG, 4153 Reinach (CH)
(72) Inventor: GULDENFELS, Dieter, 4148 Pfeffingen (CH); HIRSCHMANN, Paul E., Sugar Hill, GA 30518 (US); PEACH, Michael Anthony, Cumming; GA 30040 (US)
(74) Representative: Bohest AG
(86) International application number: PCT/US2004/026468
(87) International publication number: WO 2005/016611

(56) References cited:
- US-A- 5 904 241
- US-B1- 6 308 825

## Description

### CROSS-REFERENCE TO RELATED APPLICATION

The present application claims priority to U.S. Provisional Patent Application No. 60/494,378 filed on August 12, 2003, and entitled "Device for Retaining a Headed Pivot Rod," which is incorporated herein by reference.

### FIELD OF INVENTION

The present invention relates to conveyor belts, particularly plastic modular conveyor belts used primarily in the food industry.

### BACKGROUND OF THE INVENTION

Because they do not corrode, are lightweight, and are easy to clean, unlike metal conveyor belts, plastic conveyor belts are used widely, especially in material handling and conveying food products. Modular plastic conveyor belts are made up of molded plastic modular links, or belt modules, that can be arranged side by side in rows of selectable width. A series of spaced apart link ends extending from each side of the modules include aligned apertures to accommodate a pivot rod. The link ends along one end of a row of modules are interconnected with the link ends of an adjacent row. A pivot rod journaled in the aligned apertures of the side-by-side and end-to-end connected modules forms a hinge between adjacent rows. Rows of belt modules are then connected together to form an endless conveyor belt capable of articulating about a drive sprocket.

The retention of the pivot rod is an important feature of the modular plastic conveyor belts. Rod retention can be accomplished by enlarging the heads of the pivot rods at both ends but such would not allow for disassembly without destroying the rod head. Headless rods have been used for easier production and belt assembly. These type of rods must be blocked at both ends of the belt during use. Typically one outside module is provided with a special module having a closed end aligned with the pivot rod, and the opposite outside module is provided with a shuttle or plug-type lock for blocking the aligned apertures to prevent egress of the pivot rod, as disclosed in US 6 308 825 Bl and US 5 904 241 A. Alternatively, both edge modules may be provided with the shuttle or plug-type locks described above. Such shuttle or plug-type locks are often favored for easy installation and removal of the pivot rods. But access to both belt edges is necessary to open/close the shuttle/plug and push out/extract the rod. The need for access to both sides increases the risk of the shuttle not being closed properly and makes inspection difficult.

What is needed is a rod retaining device that only requires a special module at one edge and for which insertion and removal of the pivot rod can be carried out from one edge only.

### SUMMARY OF THE INVENTION

The present invention meets the above-described need by providing a pivot rod retaining device suitable for use with a pivot rod having a head.

### BRIEF DESCRIPTION OF THE DRAWINGS

The invention is illustrated in the drawings in which like reference characters designate the same or similar parts throughout the figures of which:
Figure 1 is a top plan view of a belt formed from belt modules of the present invention and including a partial cut-away section;
Figure 2 is an end view of one of the modules shown in Fig. 1;
Figure 3 is a cross-sectional view taken along lines 3-3 of Fig. 1;
Figure 4 is a sectional end view with the lock in the closed position;
Fig. 4A is a partial sectional end view of an alternate embodiment of the module shown in Fig. 4;
Figure 5 is a cross-sectional view taken along lines 5-5 of Fig. 4;
Fig. 5A is a bottom view of a module having a slot for access to the pivot rod;
Figure 6 is a sectional view of the lock in the open position;
Figure 7 is a side elevation view of a first embodiment of the shuttle of the present invention;
Figure 8 is a top view of the shuttle shown in Figure 7;
Figure 9 is a sectional side view of a second embodiment of the shuttle with the lock shown in the closed position; and,
Figure 10 is a top plan view of a bricklayed belt of the present invention.

### DETAILED DESCRIPTION

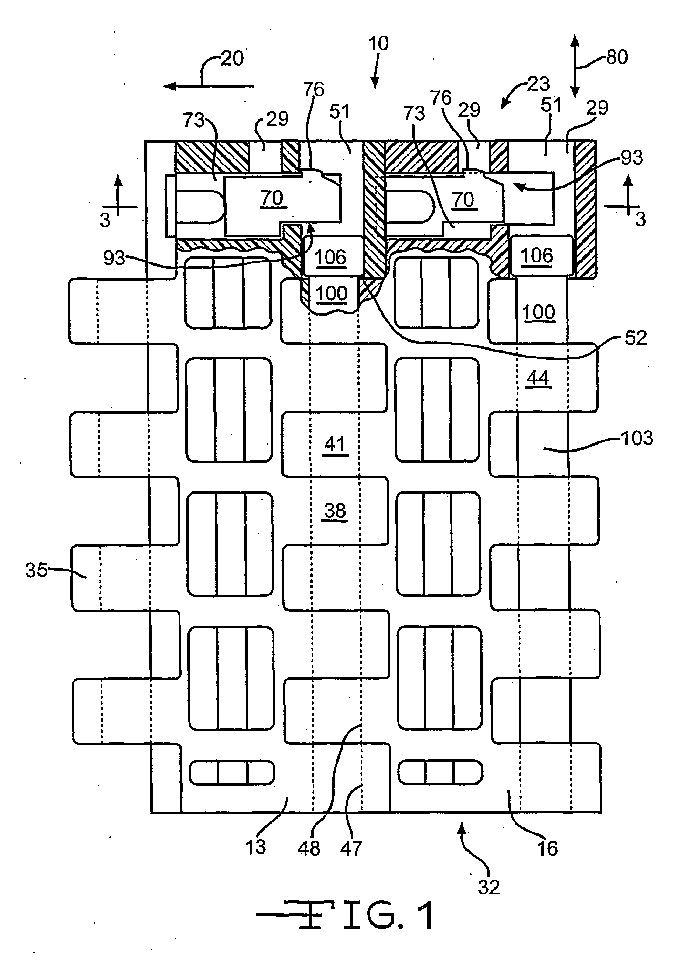

In Fig. 1, a modular conveying belt 10 is formed from the juxtaposition of belt modules 13 and 16. For reference purposes, the direction of belt travel is indicated by arrow 20, however, the belt 10 of the present invention may also travel in the opposite direction. The belt modules 13 and 16 are preferably manufactured from plastic or other materials suitable for use in conveying food items. The plastic modules may be thermoformed through a plastic molding process as will be evident to those of ordinary skill in the art. Plastic belts are relatively inexpensive, easy to clean and durable. Also, because they do not corrode and are light-weight, they are used widely, especially in material handling and conveying food products. The modules 13 and 16 shown in Fig. 1 are arranged in end-to-end fashion to form the belt 10. The edge 23 at the top of Fig. 1 is provided with a lock and an opening 29 which will be described in greater detail herein. The modules 13 and 16 are designed specifically for placement at one of the outer edges of the belt 10. The opposite edge 32 has a standard configuration as will be described below. Accordingly, standard modules can be placed alongside modules 13, 16 to form belts 10 of varying widths in bricklayed fashion.

With reference to the orientation of Fig. 1, a plurality of first link ends 35 are disposed on the left hand side of module 13 and a plurality of second link ends 38 are disposed on the right hand side of module 13. Similarly, module 16 also includes a plurality of first link ends 41 and a plurality of second link ends 44.

With reference to module 13, the second link ends 38 have a plurality of first journaling apertures 47 defined therein. The apertures 47 are sized to receive the body portion 100 of pivot rods 103. Specifically, the apertures 47 are slightly larger than the diameter of the body portion 100. The first apertures 47 are capable of aligning with similar journaling apertures 48 in the first plurality of link ends 41 disposed on the adjacent module 16. As shown in the cut-away section of Fig. 1, module 13 has an enlarged opening 51 sized to receive a head portion 106 of a pivot rod 103. Apertures 47 and 48 are smaller in diameter than the diameter of the head portion 106. As shown, the enlarged opening 51 is larger than apertures 48 of the adjacent module such that when the modules 13 and 16 are intercalated a ledge 52 is created and the pivot rod 103 is obstructed by the smaller aperture 47. Accordingly, the pivot rod 103 cannot pass through the belt 10 in the direction from edge 23 to edge 32. As a result, the link ends disposed at edge 32 do not have to be made special with closed ends or additional locks to prevent the pivot rod 103 from exiting the belt 10.

Returning to the top of the figure, the pivot rod 103 is accessible only from the top edge 23 of belt 10 for insertion and removal. A blocking member 70 is disposed in a cavity 73 formed inside each module 13, 16. The blocking member 70 is shown in the open position in module 16 and in the closed position in module 13.

As will be evident to those of ordinary skill in the art, the blocking member 70 may be installed in numerous ways including, but not limited, to the arrangements disclosed in U.S. Patent Nos. 5,904,241 and 5,217,110 which are incorporated herein by reference.

The cavity 73 provides a pathway oriented substantially transverse to axis 80 defined in the longitudinal direction of the pivot rods 103. The blocking member 70 has a detent 76 that engages with the wall surrounding opening 29 in the open position. In the closed position (shown on the left hand side with respect to the orientation of Fig. 1), the detent 76 engages with the wall surrounding an opening 93. Opening 93 extends to and intersects with enlarged opening 51.

As shown in module 13, the blocking member 70 blocks the enlarged opening 51 to prevent the pivot rod 103 from exiting the module. The blocking member 70 extends across at least 30-50% of the diameter of the enlarged opening 51.

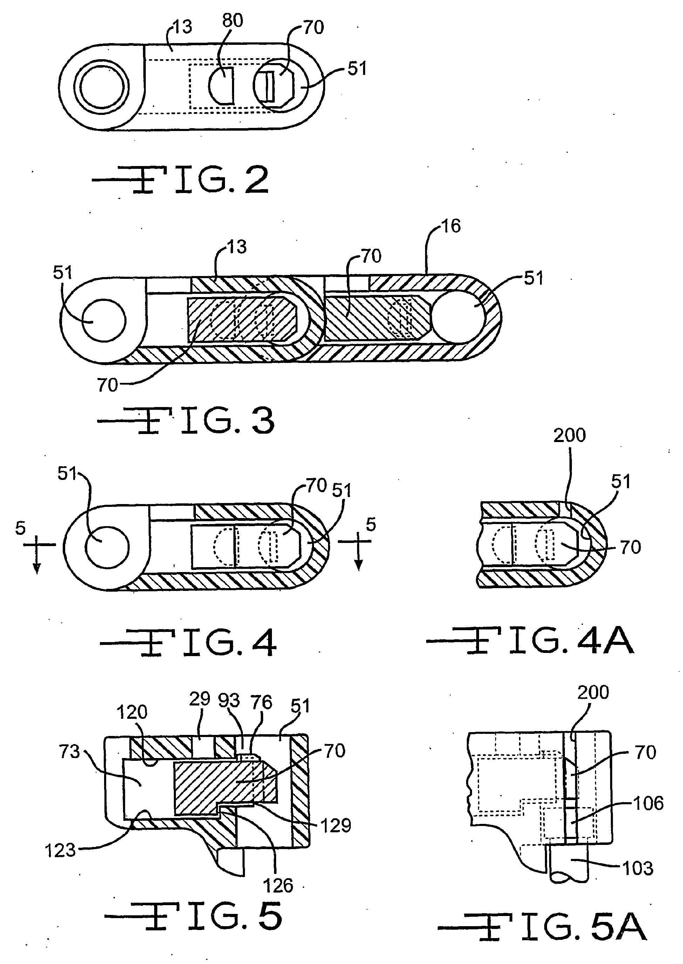

Turning to Fig. 2, the blocking member 70 is shown in the closed position where it obstructs opening 51. The end of the module 13 includes an opening 80 that provides access to the blocking member 70 for moving it between the open and closed position.

In Fig. 3, a cross-sectional view shows the blocking member 70 in the open position on the right hand side of the figure and shows the blocking member 70 in the closed position on the left hand side of the figure. As shown, the blocking member 70 moves substantially perpendicular to the longitudinal axis of the pivot rod 103. When the blocking member 70 is shifted into the position on the left where it obstructs the enlarged opening 51, the head 106 of the pivot rod 103 is captured between the blocking member 70 and the ledge 52 (best shown in Fig. 1). As a result, rod retention and rod removal are accomplished from one side of the belt 10. The modules that are bricklayed from the opposite end 32 of modules 13 and 16 may be of standard construction without any apparatus such as closed ends or additional locks for rod retention.

In Fig. 4, the blocking member 70 is shown from the end in its closed position where it extends into the enlarged opening 51 to obstruct the head of the pivot rod such that the pivot rod is prevented from exiting from the enlarged opening 51.

In Fig. 5, the cavity 73 is shown in greater detail. The cavity includes upper and lower surfaces 120 and 123. The lower surface 123 may be stepped with a vertical wall 126 and a horizontal wall 129 to provide a mechanical stop to hold the blocking member in the closed position. As shown, when the blocking member 70 is in the closed position, the detent 76 engages with the wall surrounding the opening 93 and the blocking member 70 engages with the vertical wall 126. As shown, the blocking member 70 may be formed in an L-shape to provide a cooperating surface to engage with the wall 126.

As shown in Figs. 4A and 5A, the modules 13, 16 may be provided with a slot 200. The slot 200 provides access to head portion 106 of pivot rod 103. A screw driver (not shown) or the like can be inserted through the slot 200 to engage the head of the pivot rod 103 to push it out of the bore.

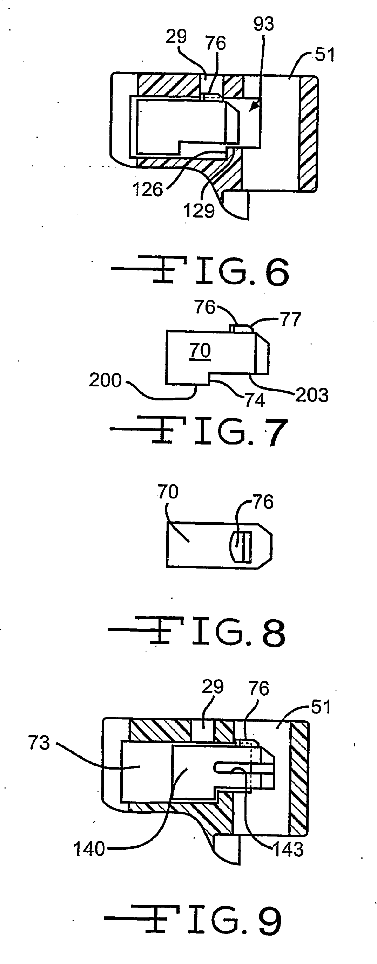

Turning to Fig. 6, when the blocking member 70 is in the open position the detent 76 is held in position between the walls surrounding the opening 29.

Referring to Figs. 7-8, the blocking member 70 may be formed in an L-shape with a vertical portion 74 forming a ledge between surfaces 200 and 203. Detent 76 may be provided with a chamfered edge 77 to provide for moving it between the open and closed positions for insertion and removal of the pivot rod 103.

In an alternate embodiment shown in Fig. 9, a blocking member 140 has a slot 143 formed therein. The slot 143 provides the blocking member 140 with additional flexibility such that member is capable of compressing to facilitate passing the detent member 76 from the open to the closed position and vice versa.

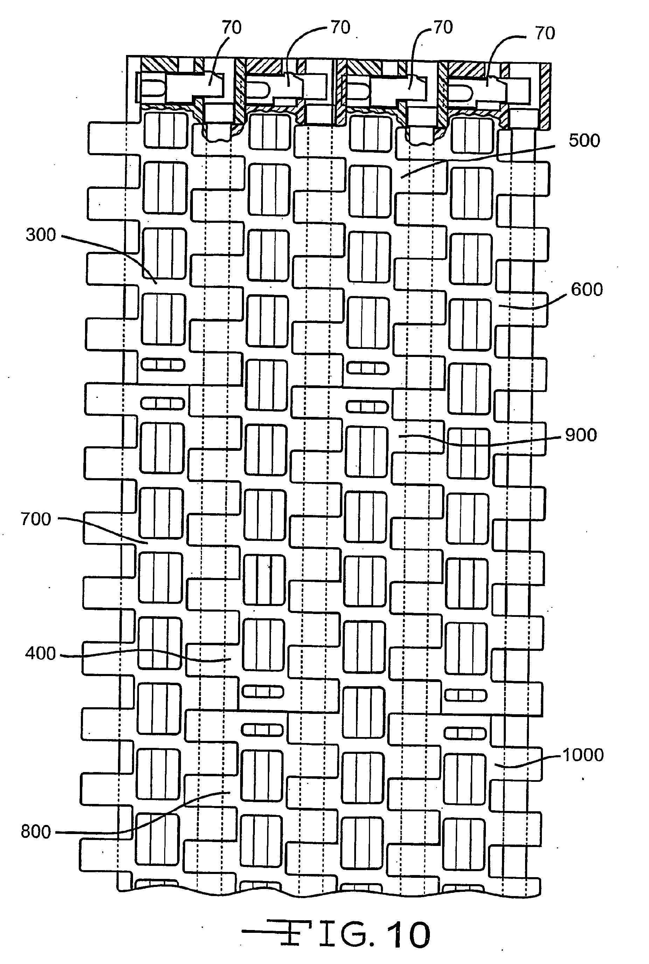

Turning to Figure 10, it will be evident to those of ordinary skill in the art that belt modules 300, 400, 500, 600, 700, 800, 900, and 1000 of the present invention may be arranged in bricklayed fashion as shown. Outer modules 300, 400, 500, and 600 include blocking member 70. Inside modules 700, 800, 900, and 1000 may be of conventional construction with typical pivot rod openings at opposite ends.

While the invention has been described in connection with certain embodiments, it is not intended to limit the scope of the invention to the particular forms set forth, but, on the contrary, it is intended to cover such alternatives, modifications, and equivalents as may be included within the spirit and scope of the invention as defined by the appended claims.

## Claims

1. A belt module (13, 16) for use with a pivot rod, the belt module (13, 16), comprising:
a first plurality of link ends (35, 41) disposed in a direction of belt travel (20), the first link ends (35, 41) having first pivot rod openings (48) disposed transverse to the direction of belt travel (20);
a second plurality of link ends (38, 44) extending in a direction opposite to the first plurality of link ends (35, 41), the second link ends (38, 44) being offset from the first link ends (35, 41) such that adjacently positioned belt modules (13, 16) are capable of intercalating so that the first link ends (35, 41) of one belt module (13, 16) fit into spaces defined between the second plurality of link ends (38, 44) of an adjacent belt module (13, 16), the second link ends (38, 44) having second pivot rod openings (47) disposed transverse to the direction of belt travel (20);
an edge portion having an edge portion pivot rod opening (51) disposed transverse to the direction of belt travel (20), the edge portion pivot rod opening (51) being in registry with the second pivot rod openings (47), the edge portion having a slot (73) defined therein, the slot (73) intersecting with the pivot rod opening (51); and,
a blocking member (70, 140) disposed in the slot (73) and capable of moving between a first position and a second position, the blocking member (70, 140) extending into the edge portion pivot rod opening (51), **characterised in that** the pivot rod is a headed pivot rod (103) and the blocking member (70, 140) obstructs the head (106) of the pivot rod (103) in the second position such that the pivot rod (103) is prevented from exiting the edge portion pivot rod opening (51), and the edge portion pivot rod opening (51) has a diameter larger than a diameter of the first (48) and second (47) pivot rod openings such that the pivot rod (103) can only be removed in one direction.

2. The belt module of Claim 1, wherein the slot (73) in the edge portion is disposed substantially parallel to the direction of belt travel (20).

3. The belt module of Claim 1, wherein the blocking member (70, 140) has a detent member (76).

4. The belt module of Claim 3, further comprising a detent opening (29) extending to the slot (73).

5. The belt module of Claim 4, wherein the detent member (76) is disposed in the detent opening (29) when the blocking member (70, 140) is in the first position.

6. The belt module of Claim 1, wherein the blocking member (70, 140) has a first portion and a second portion, the second portion being wider than the first portion such that the blocking member (70, 140) has an L-shape.

7. The belt module of Claim 1, wherein the blocking member (140) has a slot (143) defined therein.

8. The belt module of Claim 3, wherein the detent member (76) engages with a wall adjacent to the pivot rod opening (51) when the blocking member (70, 140) is in the second position.

9. A modular belt (10), comprising:
a first belt module (13) comprising a first plurality of link ends (35) disposed in a direction of belt travel (20), the first link ends (35) having first pivot rod openings disposed transverse to the direction of belt travel (20), a second plurality of link ends (38) extending in a direction opposite to the first plurality of link ends (35), the second link ends (38) being offset from the first link ends (35) such that adjacently positioned belt modules are capable of intercalating so that the first link ends (35) of one belt module (13) fit into spaces defined between the second plurality of link ends of an adjacent belt module, the second link ends (38) having second pivot rod openings (47) disposed transverse to the direction of belt travel (20), an edge portion having an edge portion pivot rod opening (51) disposed transverse to the direction of belt travel (20), the edge portion pivot rod opening (51) being in registry with the second pivot rod openings (47), the edge portion having a slot (73) defined therein, the slot (73) intersecting with the edge portion pivot rod opening (51), and a blocking member (70, 140) disposed in the slot (73) and capable of moving between a first position and a second position, the blocking member (70, 140) extending into the edge portion pivot rod opening (51) in the second position; a second belt module (16) disposed adjacent to the first belt module (13), the second belt module (16) comprising a first plurality of link ends (41) disposed in a direction of belt travel (20), the first link ends (41) having first pivot rod openings (48) disposed transverse to the direction of belt travel (20), a second plurality of link ends (44) extending in a direction opposite to the first plurality of link ends (41), the second link ends (44) being offset from the first link ends (41) such that adjacently positioned belt modules are capable of intercalating so that the first link ends (41) of one belt module fit into spaces defined between the second plurality of link ends of an adjacent belt module, the second link ends (44) having second pivot rod openings disposed transverse to the direction of belt travel, an edge portion having an edge portion pivot rod opening (51) disposed transverse to the direction of belt travel (20), the edge portion pivot rod opening (51) being in registry with the second pivot rod openings, the edge portion having a slot (73) defined therein, the slot (73) intersecting with the edge portion pivot rod opening (51), and a blocking member (70, 140) disposed in the slot (73) and capable of moving between a first position and a second position, the blocking member (70, 140) extending into the edge portion pivot rod opening (51) in the second position;
at least one pivot rod (103) disposed through the edge portion pivot rod opening (51) in the first belt module (13) and disposed through the intercalated first (48) and second (47) pivot rod openings of the first belt module (13) and the second belt module (16), **characterised in that** the at least one pivot rod (103) has an enlarged head (106) at a first end, the enlarged head (106) of the pivot rod (103) is obstructed by the blocking member (70, 140) in its second position such that the pivot rod (103) is prevented from exiting the edge portion pivot rod opening (51), and the edge portion pivot rod openings (51) of the first (13) and second (16) belt modules have a diameter larger than a diameter of the first (48) and second (47) pivot rod openings of the first (35, 41) and second (38, 44) link ends, wherein the pivot rod (103) can only be removed in one direction.

10. The modular belt (10) of Claim 9, wherein the slot (51) in the edge portion is disposed substantially parallel to the direction of belt travel (20).

11. The modular belt (10) of Claim 9, wherein the blocking member (70, 140) has a detent member (76).

12. The modular belt (10) of Claim 11, further comprising a detent opening (29) extending to the slot (73).

13. The modular belt (10) of Claim 12, wherein the detent member (76) is disposed in the detent opening (29) when the blocking member (70, 140) is in the first position.

14. The modular belt (10) of Claim 9, wherein the blocking member (70, 140) has a first portion and a second portion, the second portion being wider than the first portion such that the blocking member (70, 140) has an L-shape.

15. The modular belt (10) of Claim 9, wherein the blocking member (140) has a slot (143) defined therein.

16. The modular belt (10) of Claim 11, wherein the detent member (76) engages with a wall adjacent to the pivot rod opening (51) when the blocking member (70, 140) is in the second position.

17. A method of configuring a modular belt (10), comprising:
providing a plurality of belt modules (13, 16) having a first plurality of link ends (35, 41) disposed in a direction of belt travel (20), the first link ends (35, 41) having first pivot rod openings (48) disposed transverse to the direction of belt travel (20), a second plurality of link ends (38, 44) extending in a direction opposite to the first plurality of link ends (35, 41), the second link ends (38, 44) being offset from the first link ends (35, 41) such that adjacently positioned belt modules (13, 16) are capable of intercalating so that the first link ends (35, 41) of one belt module (13, 16) fit into spaces defined between the second plurality of link ends (38, 44) of an adjacent belt module (13, 16), the second link ends (38, 44) having second pivot rod openings (47) disposed transverse to the direction of belt travel (20), an edge portion having an edge portion pivot rod opening (51) disposed transverse to the direction of belt travel (20), the edge portion pivot rod opening (51) being in registry with the second pivot rod openings (47), the edge portion having a slot (73) defined therein, the slot (73) intersecting with the edge portion pivot rod opening (51), a blocking member (70, 140) disposed in the slot (73) and capable of moving between a first position and a second position, the blocking member (70, 140) extending into the pivot rod opening (51) in the second position;
placing pivot rods (103) through the pivot rod openings (51) and the first (48) and second (47) pivot rod openings in adjacent belt modules (13, 16) such that the first (35, 41) and second (38, 44) link ends of the adjacent belt modules (13, 16) are intercalated and the adjacent belt modules (13, 16) are interlinked into adjacent hinged rows to form an endless belt (10) capable of articulating about a drive sprocket, **characterised in that** the edge portion pivot rod opening (51) has a diameter larger than a diameter of the first (48) and second (47) pivot rod openings of the first (35, 41) and second (38, 44) link ends, wherein the pivot rods (103) can only be removed from the intercalated modules (13, 16) in one direction.

## Patentansprüche

1. Bandmodul (13, 16) zur Verwendung mit einem Drehstab, wobei das Bandmodul (13, 16) umfasst:
eine erste Vielzahl von Verbindungsgliedern (35, 41), die in einer Bewegungsrichtung des Bandes (20) angeordnet sind, wobei die ersten Verbindungsglieder (35, 41) erste Drehstaböffnungen (48) haben, die quer zur Bewegungsrichtung des Bandes (20) angeordnet sind;
eine zweite Vielzahl von Verbindungsgliedern (38, 44), die sich in Richtung entgegengesetzt zu der ersten Vielzahl von Verbindungsgliedern (35, 41) erstrecken, wobei die zweiten Verbindungsglieder (38, 44) zu den ersten Verbindungsgliedern (35, 41) so versetzt sind, dass benachbart angeordnete Bandmodule (13, 16) in der Lage sind, derart ineinander zu greifen, dass die ersten Verbindungsglieder (35, 41) eines Bandmoduls (13, 16) in Räume greifen, die zwischen der zweiten Vielzahl von Verbindungsgliedern (38, 44) eines benachbarten Bandmoduls (13, 16) gebildet sind, wobei die zweiten Verbindungsglieder (38, 44) zweite Drehstaböffnungen (47) haben, die quer zur Bewegungsrichtung des Bandes (20) angeordnet sind;
einen Randbereich mit einer Randbereich-Drehstaböffnung (51), die quer zur Bewegungsrichtung des Bandes (20) angeordnet ist und die in Übereinstimmung mit den zweiten Drehstaböffnungen (47) ist, wobei der Randbereich eine darin gebildete Aussparung (73) aufweist, die in die Randbereich-Drehstaböffnung (51) mündet; und,
ein Sperrglied (70, 140), das in der Aussparung (73) angeordnet ist und das in der Lage ist, sich zwischen einer ersten Position und einer zweiten Position zu bewegen, wobei sich das Sperrglied (70, 140) in die Randbereich-Drehstaböffnung (51) erstreckt;
**dadurch gekennzeichnet, dass** der Drehstab (103) einen Kopf aufweist, der durch das Sperrglied (70, 140) in der zweiten Position derart blockiert ist, dass der Drehstab (103) daran gehindert wird, die Randbereich-Drehstaböffnung (51) zu verlassen, und dass die Randbereich-Drehstaböffnung (51) einen
Durchmesser hat, der grösser ist als ein Durchmesser der ersten (48) und zweiten (47) Drehstaböffnungen, so dass der Drehstab (103) nur in eine Richtung entfernt werden kann.

2. Bandmodul gemäss Anspruch 1, wobei die Aussparung (73) im Randbereich im Wesentlichen parallel zur Bewegungsrichtung des Bandes (20) angeordnet ist.

3. Bandmodul gemäss Anspruch 1, wobei das Sperrglied (70, 140) ein Arretierungsteil (76) hat.

4. Bandmodul gemäss Anspruch 3, ferner umfassend eine Arretierungsöffnung (29), die in die Aussparung (73) mündet.

5. Bandmodul gemäss Anspruch 4, wobei das Arretierungsteil (76) in der Arretierungsöffnung (29) angeordnet ist, wenn das Sperrglied (70, 140) in der ersten Position ist.

6. Bandmodul gemäss Anspruch 1, wobei das Sperrglied (70, 140) einen ersten Teil und einen zweiten Teil hat, wobei der zweite Teil grösser ist als der erste Teil, so dass das Sperrglied (70, 140) eine L-Form hat.

7. Bandmodul gemäss Anspruch 1, wobei das Sperrglied (140) eine darin gebildete Aussparung (143) hat.

8. Bandmodul gemäss Anspruch 3, wobei das Arretierungsteil (76) in eine Wand benachbart zur Drehstaböffnung (51) eingreift, wenn das Sperrglied (70, 140) in der zweiten Position ist.

9. Modulares Band (10), umfassend:
ein erstes Bandmodul (13), umfassend
eine erste Vielzahl von Verbindungsgliedern (35), die in einer Bewegungsrichtung des Bandes (20) angeordnet sind, wobei die ersten Verbindungsglieder (35) erste Drehstaböffnungen haben, die quer zur Bewegungsrichtung des Bandes (20) angeordnet sind,
eine zweite Vielzahl von Verbindungsgliedern (38), die sich in Richtung entgegengesetzt zu der ersten Vielzahl von Verbindungsgliedern (35) erstrecken, wobei die zweiten Verbindungsglieder (38) so zu den ersten Verbindungsgliedern (35) versetzt sind, dass benachbart angeordnete Bandmodule in der Lage sind, derart ineinander zu greifen, dass die ersten Verbindungsglieder (35) eines Bandmoduls (13) in Räume greifen, die zwischen der zweiten Vielzahl von Verbindungsgliedern des benachbarten Bandmoduls gebildet sind, wobei die zweiten Verbindungsglieder (38) zweite Drehstaböffnungen (47) haben, die quer zur Bewegungsrichtung des Bandes (20) angeordnet sind,
einen Randbereich mit einer Randbereich-Drehstaböffnung (51), die quer zur Bewegungsrichtung des Bandes (20) angeordnet ist und die in Übereinstimmung mit den zweiten Drehstaböffnungen (47) ist, wobei der Randbereich eine darin gebildete Aussparung (73) aufweist, die in die Randbereich-Drehstaböffnung (51) mündet, und
ein Sperrglied (70, 140), das in der Aussparung (73) angeordnet ist, und das in der Lage ist,
sich zwischen einer ersten Position und einer zweiten Position zu bewegen, wobei sich das Sperrglied (70, 140) in der zweiten Position in die Randbereich-Drehstaböffnung (51) erstreckt;
ein benachbart zum ersten Bandmodul (13) angeordnetes zweites Bandmodul (16), umfassend
eine erste Vielzahl von Verbindungsgliedern (41), die in der Bewegungsrichtung des Bandes (20) angeordnet sind, wobei die ersten Verbindungsglieder (41) erste Drehstaböffnungen (48) haben, die quer zur Bewegungsrichtung des Bandes (20) angeordnet sind,
eine zweite Vielzahl von Verbindungsgliedern (44), die sich in Richtung entgegengesetzt zu der ersten Vielzahl von Verbindungsgliedern (41) erstrecken, wobei die zweiten Verbindungsglieder (44) so versetzt sind, dass benachbart angeordnete Bandmodule in der Lage sind, derart ineinander zu greifen, dass die ersten Verbindungsglieder (41) eines Bandmoduls in Räume greifen, die zwischen der zweiten Vielzahl von Verbindungsgliedern des benachbarten Bandmoduls gebildet sind, wobei die zweiten Verbindungsglieder (44) zweite Drehstaböffnungen haben, die quer zur Bewegungsrichtung des Bandes (20) angeordnet sind,
einen Randbereich mit einer Randbereich-Drehstaböffnung (51), die quer zur Bewegungsrichtung des Bandes (20) angeordnet ist und die in Übereinstimmung mit den zweiten Drehstaböffnungen (47) ist, wobei der Randbereich eine darin gebildete Aussparung (73) aufweist, die in die Randbereich-Drehstaböffnung (51) mündet, und
ein Sperrglied (70, 140), das in der Aussparung (73) angeordnet ist und in der Lage ist, sich zwischen einer ersten Position und einer zweiten Position zu bewegen, wobei sich das Sperrglied (70, 140) in der zweiten Position in die Randbereich-Drehstaböffnung (51) erstreckt;
mindestens einen Drehstab (103), der durch die Randbereich-Drehstaböffnung (51) des ersten Bandmoduls (13) und durch die ineinander greifenden ersten (48) und zweiten (47) Drehstaböffnungen des ersten Bandmoduls (13) und des zweiten Bandmoduls (16) angeordnet ist,
**dadurch gekennzeichnet, dass** der mindestens eine Drehstab (103) an einem ersten Ende einen vergrösserten Kopf (106) aufweist, der durch das Sperrglied (70, 140) in seiner zweiten Position so blockiert ist, dass der Drehstab (103) daran gehindert wird, die Randbereich-Drehstaböffnung (51) zu verlassen, und dass die Randbereich-Drehstaböffnungen (51) des ersten (13) und zweiten (16) Bandmoduls einen Durchmesser haben, der grösser ist als der Durchmesser der ersten (48) und zweiten (47) Drehstaböffnungen der ersten (35, 41) und zweiten (38, 44) Verbindungsglieder, wobei der Drehstab (103) nur in eine Richtung entfernt werden kann.

10. Modulares Band (10) gemäss Anspruch 9, wobei die Aussparung (51) im Randbereich im Wesentlichen parallel zur Bewegungsrichtung des Bandes (20) angeordnet ist.

11. Modulares Band (10) gemäss Anspruch 9, wobei das Sperrglied (70, 140) ein Arretierungsteil (76) hat.

12. Modulares Band (10) gemäss Anspruch 11, ferner umfassend eine Arretierungsöffnung (29), die in die Aussparung (73) mündet.

13. Modulares Band (10) gemäss Anspruch 12, wobei das Arretierungsteil (76) in der Arretierungsöffnung (29) angeordnet ist, wenn das Sperrglied (70, 140) in der ersten Position ist.

14. Modulares Band (10) gemäss Anspruch 9, wobei das Sperrglied (70, 140) einen ersten Teil und einen zweiten Teil hat, wobei der zweite Teil grösser ist als der erste Teil, so dass das Sperrglied (70, 140) eine L-Form hat.

15. Modulares Band (10) gemäss Anspruch 9, wobei das Sperrglied (140) eine darin gebildete Aussparung (143) hat.

16. Modulares Band (10) gemäss Anspruch 11, wobei das Arretierungsteil (76) in eine Wand benachbart zur Drehstaböffnung (51) eingreift, wenn das Sperrglied (70, 140) in der zweiten Position ist.

17. Verfahren zum Aufbau eines modularen Bandes (10), umfassend:
Bereitstellen einer Vielzahl von Bandmodulen (13, 16) mit einer ersten Vielzahl von Verbindungsgliedern (35, 41), die in einer Bewegungsrichtung des Bandes (20) angeordnet sind, wobei die ersten Verbindungsglieder (35, 41) erste Drehstaböffnungen (48) quer zur Bewegungsrichtung des Bandes (20) haben, eine zweite Vielzahl von Verbindungsgliedern (38, 44), die sich in Richtung entgegengesetzt zu der ersten Vielzahl von Verbindungsgliedern (35, 41) erstrecken, wobei die zweiten Verbindungsglieder (38, 44) so zu den ersten Verbindungsgliedern (35, 41) versetzt sind, dass benachbart angeordnete Bandmodule in der Lage sind, derart ineinander zu greifen, dass die ersten Verbindungsglieder (35, 41) eines Bandmoduls (13, 16) in Räume greifen, die zwischen der zweiten Vielzahl von Verbindungsgliedern (38, 44) des benachbarten Bandmoduls (13, 16) gebildet sind, wobei die zweiten Verbindungsglieder (38, 44) zweite Drehstaböffnungen (47) haben, die quer zur Bewegungsrichtung des Bandes (20) angeordnet sind, wobei ein Randbereich eine Randbereich-Drehstaböffnung (51) aufweist, die quer zur Bewegungsrichtung des Bandes (20) angeordnet ist und die in Übereinstimmung mit den zweiten Drehstaböffnungen (47) ist, wobei der Randbereich eine darin gebildete Aussparung (73) aufweist, die in die Randbereich- Drehstaböffnung (51) mündet, und ein Sperrglied (70, 140), das in der Aussparung (73) angeordnet ist und in der Lage ist, sich zwischen einer ersten Position und einer zweiten Position zu bewegen, wobei sich das Sperrglied (70, 140) in der zweiten Position in die Randbereich-Drehstaböffnung (51) erstreckt; Einbringen von Drehstäben (103) durch die Randbereich-Drehstaböffnungen (51) und die ersten (48) und zweiten (47) Drehstaböffnungen der benachbarten Bandmodule (13, 16) derart, dass die ersten (35, 41) und zweiten (38, 44) Verbindungsglieder der benachbarten Bandmodule (13, 16) ineinander greifen und die benachbarten Bandmodule (13, 16) mit miteinander gelenkig verbundenen Reihen verbunden sind, um ein endloses Band (10) zu bilden, das in der Lage ist, über ein Antriebszahnrad gelenkt zu werden, **dadurch gekennzeichnet, dass** die Randbereich-Drehstaböffnung (51) einen Durchmesser hat, der grösser ist als der Durchmesser der ersten (48) und zweiten (47) Drehstaböffnungen der ersten (35, 41) und zweiten (38, 44) Verbindungsglieder, wobei die Drehstäbe (103) von den ineinander greifenden Bandmodulen (13, 16) nur in eine Richtung entfernt werden können.

## Revendications

1. Courroie modulaire (13, 16) destinée à une utilisation avec une tige de pivot, la courroie modulaire (13, 16), comprenant :
une première pluralité d'extrémités de liaison (35, 41) disposées dans une direction de déplacement de la courroie (20), les premières extrémités de liaison (35, 41) ayant des premières ouvertures de tige de pivot (48) disposées transversalement à la direction de déplacement de la courroie (20) ;
une deuxième pluralité d'extrémités de liaison (38, 44) s'étendant dans une direction opposée à la première pluralité d'extrémités de liaison (35, 41), les deuxièmes extrémités de liaison (38, 44) étant décalées par rapport aux premières extrémités de liaison (35, 41) de sorte que des courroies modulaires positionnées de manière adjacente (13, 16) sont capables de s'intercaler si bien que les premières extrémités de liaison (35, 41) d'une courroie modulaire (13, 16) s'insèrent dans les espaces définis entre la deuxième pluralité d'extrémités de liaison (38, 44) d'une courroie modulaire adjacente (13, 16), les deuxièmes extrémités de liaison (38, 44) ayant des deuxièmes ouvertures de tige de pivot (47) disposées transversalement à la direction de déplacement de la courroie (20) ;
une partie de bord ayant une ouverture de tige de pivot de partie de bord (51) disposée transversalement à la direction de déplacement de la courroie (20), l'ouverture de tige de pivot de partie de bord (51) correspondant avec les deuxièmes ouvertures de tige de pivot (47), la partie de bord ayant une fente (73) définie dans celle-ci, la fente (73) intersectant l'ouverture de tige de pivot (51) ; et,
un élément bloquant (70, 140) disposé dans la fente (73) et capable de se déplacer entre une première position et une deuxième position, l'élément bloquant (70, 140) s'étendant dans l'ouverture de tige de pivot de partie de bord (51), **caractérisée en ce que** la tige de pivot est une tige de pivot à tête (103) et l'élément bloquant (70, 140) obstrue la tête (106) de la tige de pivot (103) dans la deuxième position de sorte que la tige de pivot (103) est empêchée de sortir de l'ouverture de tige de pivot de partie de bord (51), et l'ouverture de tige de pivot de partie de bord (51) a un diamètre plus grand qu'un diamètre des premières (48) et deuxièmes (47) ouvertures de tige de pivot de sorte que la tige de pivot (103) peut seulement être retirée dans une direction.

2. Courroie modulaire selon la revendication 1, dans laquelle la fente (73) dans la partie de bord est disposée sensiblement parallèlement à la direction de déplacement de la courroie (20).

3. Courroie modulaire selon la revendication 1, dans laquelle l'élément bloquant (70, 140) possède un élément d'encliquetage (76).

4. Courroie modulaire selon la revendication 3, comprenant en outre une ouverture d'encliquetage (29) s'étendant jusqu'à la fente (73).

5. Courroie modulaire selon la revendication 4, dans laquelle l'élément d'encliquetage (76) est disposé dans l'ouverture d'encliquetage (29) lorsque l'élément bloquant (70, 140) est dans la première position.

6. Courroie modulaire selon la revendication 1, dans laquelle l'élément bloquant (70, 140) possède une première partie et une deuxième partie, la deuxième partie étant plus large que la première partie de sorte que l'élément bloquant (70, 140) est en forme de L.

7. Courroie modulaire selon la revendication 1, dans laquelle l'élément bloquant (140) possède une fente (143) définie dans celui-ci.

8. Courroie modulaire selon la revendication 3, dans laquelle l'élément d'encliquetage (76) est mis en prise avec une paroi adjacente à l'ouverture de tige de pivot (51) lorsque l'élément bloquant (70, 140) est dans la deuxième position.

9. Courroie modulaire (10), comprenant :
une première courroie modulaire (13) comprenant une première pluralité d'extrémités de liaison (35) disposées dans une direction de déplacement de la courroie (20), les premières extrémités de liaison (35) ayant des premières ouvertures de tige de pivot disposées transversalement à la direction de déplacement de la courroie (20), une deuxième pluralité d'extrémités de liaison (38) s'étendant dans une direction opposée à la première pluralité d'extrémités de liaison (35), les deuxièmes extrémités de liaison (38) étant décalées par rapport aux premières extrémités de liaison (35) de sorte que des courroies modulaires positionnées de manière adjacente sont capables de s'intercaler si bien que les premières extrémités de liaison (35) d'une courroie modulaire (13) s'insèrent dans les espaces définis entre la deuxième pluralité d'extrémités de liaison d'une courroie modulaire adjacente, les deuxièmes extrémités de liaison (38) ayant des deuxièmes ouvertures de tige de pivot (47) disposées transversalement à la direction de déplacement de la courroie (20), une partie de bord ayant une ouverture de tige de pivot de partie de bord (51) disposée transversalement à la direction de déplacement de la courroie (20), l'ouverture de tige de pivot de partie de bord (51) correspondant avec les deuxièmes ouvertures de tige de pivot (47), la partie de bord ayant une fente (73) définie dans celle-ci, la fente (73) intersectant l'ouverture de tige de pivot de partie de bord (51), et un élément bloquant (70, 140) disposé dans la fente (73) et capable de se déplacer entre une première position et une deuxième position, l'élément bloquant (70, 140) s'étendant dans l'ouverture de tige de pivot de partie de bord (51) dans la deuxième position ;
une deuxième courroie modulaire (16) disposée de manière adjacente à la première courroie modulaire (13), la deuxième courroie modulaire (16) comprenant une première pluralité d'extrémités de liaison (41) disposées dans une direction de déplacement de la courroie (20), les premières extrémités de liaison (41) ayant des premières ouvertures de tige de pivot (48) disposées transversalement à la direction de déplacement de la courroie (20), une deuxième pluralité d'extrémités de liaison (44) s'étendant dans une direction opposée à la première pluralité d'extrémités de liaison (41), les deuxièmes extrémités de liaison (44) étant décalées par rapport aux premières extrémités de liaison (41) de sorte que des courroies modulaires positionnées de manière adjacente sont capables de s'intercaler si bien que les premières extrémités (41) d'une courroie modulaire s'insèrent dans les espaces définis entre la deuxième pluralité d'extrémités de liaison d'une courroie modulaire adjacente, les deuxièmes extrémités de liaison (44) ayant des deuxièmes ouvertures de tige de pivot disposées transversalement à la direction de déplacement de la courroie, une partie de bord ayant une ouverture de tige de pivot de partie de bord (51) disposée transversalement à la direction de déplacement de la courroie (20), l'ouverture de tige de pivot de partie de bord (51) correspondant avec les deuxièmes ouvertures de tige de pivot, la partie de bord ayant une fente (73) définie dans celle-ci, la fente (73) intersectant l'ouverture de tige de pivot de partie de bord (51), et un élément bloquant (70, 140) disposé dans la fente (73) et capable de se déplacer entre une première position et une deuxième position, l'élément bloquant (70, 140) s'étendant dans l'ouverture de tige de pivot de partie de bord (51) dans la deuxième position ;
au moins une tige de pivot (103) disposée à travers l'ouverture de tige de pivot de partie de bord (51) dans la première courroie modulaire (13) et disposée à travers les premières (48) et deuxièmes (47) ouvertures de pivot intercalées de la première courroie modulaire (13) et la deuxième courroie modulaire (16), **caractérisée en ce que** l'au moins une tige de pivot (103) possède une tête élargie (106) à une première extrémité, la tête élargie (106) de la tige de pivot (103) est obstruée par l'élément bloquant (70, 140) dans sa deuxième position de sorte que la tige de pivot (103) est empêchée de sortir de l'ouverture de tige de pivot de partie de bord (51), et les ouvertures de tige de pivot de partie de bord (51) des premières (13) et deuxièmes (16) courroies modulaires ont un diamètre plus grand qu'un diamètre des premières (48) et deuxièmes (47) ouvertures de tige de pivot des premières (35, 41) et deuxièmes (38, 44) extrémités de liaison, où la tige de pivot (103) peut seulement être retirée dans une direction.

10. Courroie modulaire (10) selon la revendication 9, dans laquelle la fente (51) dans la partie de bord est disposée sensiblement parallèlement à la direction de déplacement de la courroie (20).

11. Courroie modulaire (10) selon la revendication 9, dans laquelle l'élément bloquant (70, 140) possède un élément d'encliquetage (76).

12. Courroie modulaire (10) selon la revendication 11, comprenant en outre une ouverture d'encliquetage (29) s'étendant jusqu'à la fente (73).

13. Courroie modulaire (10) selon la revendication 12, dans laquelle l'élément d'encliquetage (76) est disposé dans l'ouverture d'encliquetage (29) lorsque l'élément bloquant (70, 140) est dans la première position.

14. Courroie modulaire (10) selon la revendication 9, dans laquelle l'élément bloquant (70, 140) possède une première partie et une deuxième partie, la deuxième partie étant plus large que la première partie de sorte que l'élément bloquant (70, 140) est en forme de L.

15. Courroie modulaire (10) selon la revendication 9, dans laquelle l'élément bloquant (140) possède une fente (143) définie dans celui-ci.

16. Courroie modulaire (10) selon la revendication 11, dans laquelle l'élément d'encliquetage (76) est mis en prise avec une paroi adjacente à l'ouverture de tige de pivot (51) lorsque l'élément bloquant (70, 140) est dans la deuxième position.

17. Procédé de configuration d'une courroie modulaire (10), consistant à :
fournir une pluralité de courroies modulaires (13, 16) ayant une première pluralité d'extrémités de liaison (35, 41) disposées dans une direction de déplacement de la courroie (20), les premières extrémités de liaison (35, 41) ayant des premières ouvertures de tige de pivot (48) disposées transversalement à la direction de déplacement de la courroie (20), une deuxième pluralité d'extrémités de liaison (38, 44) s'étendant dans une direction opposée à la première pluralité d'extrémités de liaison (35, 41), les deuxièmes extrémités de liaison (38, 44) étant décalées par rapport aux premières extrémités de liaison (35, 41) de sorte que des courroies modulaires positionnées de manière adjacente (13, 16) sont capables de s'intercaler si bien que les premières extrémités de liaison (35, 41) d'une courroie modulaire (13, 16) s'insèrent dans les espaces définis entre la deuxième pluralité d'extrémités de liaison (38, 44) d'une courroie modulaire adjacente (13, 16), les deuxièmes extrémités de liaison (38, 44) ayant des deuxièmes ouvertures de tige de pivot (47) disposées transversalement à la direction de déplacement de la courroie (20), une partie de bord ayant une ouverture de tige de pivot de partie de bord (51) disposée transversalement à la direction de déplacement de la courroie (20), l'ouverture de tige de pivot de partie de bord (51) correspondant avec les deuxièmes ouvertures de tige de pivot (47), la partie de bord ayant une fente (73) définie dans celle-ci, la fente (73) intersectant l'ouverture de tige de pivot de partie de bord (51), un élément bloquant (70, 140) disposé dans la fente (73) et capable de se déplacer entre une première position et une deuxième position, l'élément bloquant (70, 140) s'étendant dans l'ouverture de tige de pivot (51) dans la deuxième position ;
placer des tiges de pivot (103) à travers les ouvertures de tige de pivot (51) et les premières (48) et les deuxièmes (47) ouvertures de tige de pivot dans des courroies modulaires adjacentes (13, 16) de sorte que les premières (35, 41) et les deuxièmes (38, 44) extrémités de liaison des courroies modulaires adjacentes (13, 16) sont intercalées et les courroies modulaires adjacentes (13, 16) sont liées les unes aux autres dans des rangées à charnières adjacentes pour former une courroie sans fin (10) capable de s'articuler autour d'une roue d'entraînement, **caractérisé en ce que** l'ouverture de tige de pivot de partie de bord (51) a un diamètre plus important qu'un diamètre des premières (48) et deuxièmes (47) ouvertures de tige de pivot des premières (35, 41) et deuxièmes (38, 44) extrémités de liaison, où les tiges de pivot (103) peuvent seulement être retirées des courroies modulaires intercalées (13, 16) dans une direction.
